# EUROPÄISCHE PATENTSCHRIFT

(11) **EP 2 994 367 B1**
(45) Veröffentlichungstag und Bekanntmachung des Hinweises auf die Patenterteilung: **03.10.2018**
(21) Anmeldenummer: 14718917.9
(22) Anmeldetag: 15.04.2014
(51) Int. Cl.: B62D 25/04, B62D 29/00

(54) **SÄULE FÜR EINE KRAFTFAHRZEUG-ROHBAUSTRUKTUR, VERFAHREN ZUR HERSTELLUNG EINER SÄULE UND KRAFTFAHRZEUG-ROHBAUSTRUKTUR**
COLUMN FOR A MOTOR VEHICLE BODY SHELL STRUCTURE, METHOD FOR THE PRODUCTION OF A COLUMN AND MOTOR VEHICLE BODY SHELL STRUCTURE
MONTANT POUR UNE STRUCTURE DE CARROSSERIE DE VÉHICULE AUTOMOBILE, PROCÉDÉ DE FABRICATION D'UN MONTANT ET STRUCTURE DE CARROSSERIE DE VÉHICULE AUTOMOBILE

(30) Priorität: 07.05.2013 DE 102013007805
(43) Veröffentlichungstag der Anmeldung: 16.03.2016
(73) Patentinhaber: Daimler AG, 70327 Stuttgart (DE)
(72) Erfinder: KIRTZAKIS, Stylianos, 76327 Söllingen (DE); BENDIKS, Michael, 73207 Plochingen (DE); SPITZMUELLER, Florian, 71034 Böblingen (Dagersheim) (DE); KEMPF, Manfred, 88267 Vogt (DE); THALEMANN, Jürgen, 71711 Steinheim (DE)
(74) Vertreter: JENSEN & SON
(86) Internationale Anmeldenummer: PCT/EP2014/001018
(87) Internationale Veröffentlichungsnummer: WO 2014/180532

(56) Entgegenhaltungen:
- DE-A1-102009 022 486
- DE-A1-102009 035 324
- DE-A1-102009 041 703
- DE-A1-102010 051 785
- FR-A1- 2 959 981
- US-A1- 2013 106 138

## Beschreibung

Die Erfindung betrifft eine Säule für eine Kraftfahrzeug-Rohbaustruktur gemäß Oberbegriff des Anspruchs 1 sowie eine Kraftfahrzeug-Rohbaustruktur gemäß Anspruch 6.

Säulen und Verfahren zur Herstellung von Säulen der hier angesprochenen Art sind bekannt. Eine bekannte Säule in Schalenbauweise aus Stahl weist mehrere Bauteile auf, die insbesondere aus verschiedenen hochfesten, festen und/oder duktilen Stahlblechen aufwändig miteinander zu fügen sind. Bekannt sind auch Säulen, die einen Säulenkörper aufweisen, der zumindest bereichsweise als Gussteil, beispielsweise als Leichtmetall-Gussteil ausgebildet ist. Es sind auch Säulen bekannt, deren Säulenkörper aus höherfesten Blechen durch Innenhochdruckumformen ausgebildet ist. Schließlich ist nach einem nicht vor veröffentlichten Stand der Technik eine Mittelsäule bekannt, die einen Säulenkörper aufweist, der durch Massivumformen, insbesondere durch Schmieden, hergestellt ist. Die bekannten Lösungen sind insbesondere in Hinblick auf ihre Materialeigenschaften und in Hinblick auf ihre Anbindung an benachbarte Teile einer Kraftfahrzeug-Rohbaustruktur verbesserungswürdig.

Aus der DE 10 2009 022 486 A1 ist bereits eine Säule für eine Kraftfahrzeug-Rohbaustruktur mit einem Säulenkörper bekannt, der zumindest in einem ersten Bereich einen ersten Werkstoff und in jeweiligen zweiten Bereichen einen zweiten Werkstoff umfasst. Die einzelnen Bereiche sind dabei durch Schweißen miteinander verbunden.

Eine ähnlich gestaltete Säule ist aus der gattungsgemäßen US2013/0106138 A1 bekannt, bei der ein Grundsteg durch ein Verstärkungspatch aus einem faserverstärkten Kunststoff versehen ist.

Aus der DE 10 2009 035 324 A1 ist des Weiteren eine Säule bekannt, bei der ein Stahlbauteil zumindest teilweise in ein Leichtmetallgussbauteil eingegossen ist.

Die DE 10 2010 051 785 A1 zeigt eine Karosserie für einen Kraftwagen, bei der verschiedene Karosseriebauteile als Hybridbauteile mit Teilbereichen unterschiedlichen Werkstoffs ausgebildet sind. Die Teilbereiche sind dabei durch Fügen untereinander verbunden.

Ähnliche, durch Fügen zweier Bauteile gebildete Säulen zeigen auch die DE 10 2009 041 703 A1 und die FR 2 959 981 A1.

Der Erfindung liegt daher die Aufgabe zugrunde, eine Säule für eine Kraftfahrzeug-Rohbaustruktur sowie ein Verfahren zur Herstellung einer solchen Säule zu schaffen, wobei die genannten Nachteile nicht auftreten. Insbesondere soll die Säule verbesserte Materialeigenschaften sowie eine verbesserte Anbindbarkeit an benachbarte Elemente einer Kraftfahrzeug-Rohbaustruktur aufweisen. Der Erfindung liegt auch die Aufgabe zugrunde, eine Kraftfahrzeug-Rohbaustruktur mit einer entsprechenden Säule zu schaffen.

Zur Lösung dieser Aufgabe wird eine Säule für eine Kraftfahrzeug-Rohbaustruktur mit den Merkmalen des Anspruch 1 vorgeschlagen. Diese weist einen Säulenkörper auf, der zumindest in einem ersten Bereich einen ersten Werkstoff umfasst. Der Säulenkörper ist zumindest in dem ersten Bereich durch Schmieden, hergestellt. Die Säule zeichnet sich dadurch aus, dass mindestens ein zweiter Bereich des Säulenkörpers einen zweiten Werkstoff umfasst, der von dem ersten Werkstoff verschieden ist. Auf diese Weise wird eine Säule mit einem hybriden Säulenkörper geschaffen, wodurch die Materialeigenschaften der Säule bedarfsgerecht abgestimmt und insbesondere in Hinblick auf eine Auslegung für einen Unfall optimiert werden können. Insbesondere können die Zugfestigkeit, Dehngrenze, Bruchdehnung und/oder Duktilität der Säule anforderungsgerecht und aufgrund der hybriden Bauweise auch lokal anforderungsgerecht ausgestaltet werden.

Dadurch, dass zumindest der erste Bereich der Säule durch Schmieden ausgebildet wird, weist zumindest dieser Bereich ein hochverdichtetes Gefüge auf, welches völlig lunkerfrei ist. Hierdurch ergibt sich eine im Vergleich zu Gussteilen erhöhte mechanische Stabilität und ein verringerter Aufwand bei der Bauteilprüfung. Beim Schmieden ist es darüber hinaus ohne Weiteres möglich, einen Querschnitt des Säulenkörpers lokal belastungsgerecht zu gestalten, wobei zumindest der erste Bereich der Mittelsäule eine variierende Querschnittsgröße und/oder Querschnittsform aufweisen kann. Es ist insbesondere möglich, den Querschnitt des Säulenkörpers belastungsgerecht lokal so auszugestalten, dass mechanisch hochbelastete Bereiche eine größere Wandstärke aufweisen als mechanisch geringer belastete Bereiche. Daher ist es nicht nötig, alle Bereiche der Säule auf eine in einem mechanisch höchstbelasteten Bereich nötige Wandstärke auszulegen. Vielmehr ist eine bedarfsgerechte Gestaltung der Wandstärke möglich. Es ist auch möglich, eine Faserstruktur des Gefüges zumindest im ersten Bereich beim Schmieden so zu gestalten, dass ein Faserverlauf in mechanisch hochbelasteten Bereichen gezielt ausgerichtet ist, wodurch diese eine besonders hohe mechanische Stabilität und Festigkeit erhalten. Insbesondere kann der Faserverlauf in mechanisch hochbelasteten Bereichen abweichend von dem Faserverlauf in mechanisch geringer belasteten Bereichen ausgebildet werden. Beim Schmieden ist so ein optimaler Kraftfluss in dem geschmiedeten Bauteil einstellbar. Durch die höhere Festigkeit und Stabilität des geschmiedeten Bereichs ist es insgesamt möglich, die Wandstärke des Säulenkörpers zu reduzieren, sodass auch der mechanisch höchstbelastete Bereich mit einer dünneren Wandstärke ausgebildet sein kann, als dies beispielsweise bei einem Gussteil möglich ist. Wandstärken in mechanisch geringer belasteten Bereichen können weiter reduziert werden. Insgesamt sind so erhebliche Gewichtseinsparungen und eine schlankere Gestaltung der Säule möglich. Hierdurch ist auch ein Sichtwinkel im Bereich der Säule für einen Kraftfahrer vergrößerbar, weil die Säule insgesamt schlanker baut. Auch steht mehr Platz zum Einsteigen zur Verfügung, insbesondere wenn die Säule für die Rohbaustruktur von viersitzigen Fahrzeugen verwendet wird. In diesem Fall steht insbesondere mehr Raum zur Verfügung, um hintere Plätze des Kraftfahrzeugs zu erreichen.

Bei geschmiedeten Bauteilen ergibt sich auch ein verringerter Nachbearbeitungsaufwand, was Herstellungskosten spart.

Die erfindungsgemäße Säule zeichnet sich zudem dadurch aus, dass der mindestens eine zweite Bereich als Verstärkungsbereich ausgebildet ist, welcher als Verstärkungseinlage, als Verstärkungskern und/oder als Verstärkungsseele ausgebildet und aus einem Stahl, einem Leichtmetall oder einer Leichtmetalllegierung gebildet ist. Vorzugsweise ist der mindestens eine zweite Bereich in Hinblick auf seine Form und/oder seiner Anordnung in oder an dem Säulenkörper auf die geforderten Bauteileigenschaften und/oder die zu erwartenden mechanischen Belastungen der Säule abgestimmt.

Die erfindungsgemäße Säule zeichnet sich zudem dadurch aus, dass der zweite Werkstoff Stahl, insbesondere höherfesten Stahl, umfasst oder aus Stahl, insbesondere aus höherfestem Stahl, besteht. Alternativ oder zusätzlich ist es möglich, dass der zweite Werkstoff ein Leichtmetall oder eine Leichtmetalllegierung umfasst oder aus einem Leichtmetall oder einer Leichtmetalllegierung besteht. Insbesondere ist es möglich, dass der zweite Werkstoff Aluminium oder eine Aluminiumlegierung, bevorzugt EN-AW-7075, umfasst oder aus Aluminium oder einer Aluminiumlegierung, bevorzugt EN-AW-7075, besteht. Alternativ oder zusätzlich ist es möglich, dass der zweite Werkstoff Magnesium oder eine Magnesiumlegierung umfasst, oder aus Magnesium oder einer Magnesiumlegierung besteht. Insbesondere die Wahl eines Leichtmetalls oder einer Leichtmetalllegierung für den zweiten Werkstoff ermöglicht eine weitere Gewichtsreduktion für die Säule.

Vorzugsweise weist der zweite Werkstoff eine höhere Festigkeit auf als der erste Werkstoff. In diesem Fall wird der Säulenkörper in dem zweiten Bereich schon aufgrund der Materialeigenschaften des zweiten Werkstoffs verstärkt. Erfindungsgemäß ist eine Säule mit einem Säulenkörper vorgesehen, der in einer Alternative im Wesentlichen ein Leichtmetall umfasst, der alternativ eine integrierte Stahlseele, insbesondere aus höherfestem Stahl aufweist, oder bevorzugt eine Seele aus einer höherfesten Aluminiumlegierung, beispielsweise EN-AW-7075, wobei die Seele vorzugsweise in das Leichtmetall eingeschmiedet, von dem Leichtmetall umschmiedet oder an das Leichtmetall angeschmiedet ist.

Ein bevorzugtes Ausführungsbeispiel der Säule umfasst mehr als einen ersten Bereich, der durch Schmieden hergestellt ist. Die verschiedenen ersten Bereiche können jeweils den gleichen, ersten Werkstoff umfassen oder aus diesem bestehen. Alternativ ist es möglich, dass die verschiedenen ersten Bereiche verschiedene Werkstoffe umfassen oder aus verschiedenen Werkstoffen bestehen.

Alternativ oder zusätzlich ist es bevorzugt möglich, dass die Säule mehr als einen zweiten Bereich umfasst. Dabei ist es möglich, dass die verschiedenen zweiten Bereiche den gleichen zweiten Werkstoff umfassen. Alternativ ist es möglich, dass die zweiten Bereiche jeweils verschiedene, zweite Werkstoffe umfassen, die von dem ersten Werkstoff des mindestens einen ersten Bereichs verschieden sind.

Es wird eine Säule bevorzugt, die sich dadurch auszeichnet, dass der erste Werkstoff ein Leichtmetall oder eine Leichtmetalllegierung umfasst, vorzugsweise aus einem Leichtmetall oder einer Leichtmetalllegierung besteht. Bevorzugt umfasst der erste Werkstoff Aluminium oder eine Aluminiumlegierung, oder er besteht aus Aluminium oder einer Aluminiumlegierung. Alternativ oder zusätzlich umfasst der erste Werkstoff bevorzugt Magnesium oder eine Magnesiumlegierung, oder er besteht aus Magnesium oder einer Magnesiumlegierung. Durch die Wahl eines Leichtmetalls oder einer Leichtmetalllegierung für den ersten Werkstoff ist eine weitere Gewichtsreduktion möglich. Dies trägt dem Leichtbaugedanken Rechnung. Insbesondere dann, wenn in einem Anbindungsbereich der Säule an benachbarte Elemente der Kraftfahrzeug-Rohbaustruktur der entsprechend gewählte erste Werkstoff vorliegt, wobei auch die benachbarten Elemente ein Leichtmetall oder eine Leichtmetalllegierung umfassen, wird ein Fügen der Säule mit den benachbarten Elementen im Vergleich zu einer Materialkombination Stahl/Leichtmetall deutlich erleichtert. Da hier vielmehr gleiche oder zumindest ähnliche Materialien miteinander gefügt werden, können Standard-Fügeverfahren eingesetzt werden, was bei einer Materialpaarung Stahl/Leichtmetall, insbesondere Stahl/Aluminium, nicht möglich ist. Insbesondere kann eine Materialpaarung einer 7000er Aluminiumlegierung mit einer 6000er Aluminiumlegierung vorgesehen sein. Hierzu besteht der erste Werkstoff vorzugsweise aus einer 7000er Aluminiumlegierung oder aus einer 6000er Aluminiumlegierung.

Durch die Wahl eines Leichtmetalls oder einer Leichtmetalllegierung für den ersten Werkstoff wird auch eine Wasserstoffversprödung vermieden, die sonst bei hochfesten Stählen, die bisher insbesondere für B-Säulen verwendet werden, auftritt.

Alternativ wird eine Säule bevorzugt, die sich dadurch auszeichnet, dass der zweite Bereich als Funktionsbereich ausgebildet ist. Die in Hybridbauweise hergestellte Säule kann also bevorzugt ein integriertes Funktionselement umfassen, beispielsweise eine Aufnahme oder ein Anbindungs- oder Verstärkungsstelle für einen Gurtaufroller, eine Gurthalterung, eine Airbaghalterung und/oder einen Motor für einen Fensterheber. Auch ist es möglich, dass die Säule als zweiten Bereich eine Verstärkung für ein Schloss, eine Verstärkung für ein Türscharnier, einen Fixierzapfen, eine Gewindebuchse, einen Einsatz beziehungsweise ein Insert, insbesondere einen Gewindeeinsatz, und/oder ein Teil des Türscharniers selbst, vorzugsweise eine Grundplatte oder ein Säulenteil, umfasst. Ist der zweite Bereich als Funktionsbereich ausgebildet, kann dieser zwanglos in die Säule integriert werden. Dadurch werden separate Einzelteile vermieden, und es entfallen Fügeschritte sowie dafür vorgesehenen Werkzeuge und Vorrichtungen. Hierdurch können Herstellungskosten, insbesondere logistische Kosten eingespart werden.

Es wird auch eine Säule bevorzugt, die sich dadurch auszeichnet, dass sie als A-Säule, als B-Säule oder als C-Säule ausgebildet ist. Die Säule ist bevorzugt als Langsäule oder als Kurzsäule ausgebildet, insbesondere abhängig davon, ob sie für die Kraftfahrzeug-Rohbaustruktur eines Fahrzeugs mit festem Fahrzeugdach, insbesondere eine Limousine, oder für ein Kraftfahrzeug mit variablem Dach, insbesondere einem Cabriolet oder einem Kraftfahrzeug mit abnehmbarem Hardtop vorgesehen ist. Insbesondere an eine Kurzsäule werden erhöhte mechanische Anforderungen gestellt, sodass sich hier die verbesserten Baueileigenschaften der Säule besonders günstig auswirken.

Schließlich wird eine Säule bevorzugt, die sich dadurch auszeichnet, dass mindestens ein Anbindungsknoten zur Anbindung des Säulenkörpers an eine Kraftfahrzeug-Rohbaustruktur einstückig mit dem Säulenkörper ausgebildet ist. Dabei ist insbesondere bei einer Kurzsäule bevorzugt nur ein Anbindungsknoten im unteren Bereich der Säule vorgesehen, mit dem diese vorzugsweise mit einem Längsträger oder Schweller und/oder mit einem Querträger der Kraftfahrzeug-Rohbaustruktur gefügt wird. Eine Langsäule weist vorzugsweise zwei Anbindungsknoten zur Anbindung an einen Dachrahmen und einen unteren Längsträger und/oder Querträger auf. Der mindestens eine Anbindungsknoten ist vorzugsweise beim Massivumformen an dem Säulenkörper ausgeformt oder an den Säulenkörper angeschmiedet. Hierdurch wird eine Funktionsintegration erreicht, wobei ansonsten separat vorgesehene und miteinander gefügte Bauteile quasi substituiert werden. Dadurch ergibt sich insgesamt für eine Kraftfahrzeug-Rohbaustruktur, in welcher die Säule verwendet wird, eine verringerte Teilezahl, was Kosteneinsparungen in der Logistik und im Produktionsprozess ermöglicht. Es entfallen nämlich Fügeschritte, die ansonsten nötig wären, um den Säulenkörper mit dem mindestens einen Anbindungsknoten zu fügen. Da insbesondere ein in diesem Bereich ansonsten übliches Löten oder Schweißen entfällt, werden auch Wärmeverzüge unterbunden, wodurch gerade im Bereich des Anbindungsknotens eine Maßhaltigkeit und ein Gefüge der Säule erhalten bleiben. In gleicher Weise entfallen Fügetoleranzen, welche bei einer zweistückigen Ausbildung von Säulenkörper und Anbindungsknoten gegeben wären. Die gesamte Konstruktion der Kraftfahrzeug-Rohbaustruktur wird dadurch besonders maßhaltig.

Der mindestens eine Anbindungsknoten ist vorzugsweise so ausgebildet, dass er mittels mechanischer Fügetechniken, vorzugsweise Schrauben und/oder Nieten, in einfacher Weise mit der Kraftfahrzeug-Rohbaustruktur gefügt werden kann. Hierzu weist er vorzugsweise Befestigungsmittel wie Bohrungen oder auch Gewinde auf, wobei insbesondere Bohrungen bevorzugt beim Schmieden hergestellt werden können. Insbesondere beim Gesenkschmieden ist es möglich, Ausnehmungen und/oder Bohrungen mithilfe eines entsprechend ausgebildeten Schmiedegesenks in den zu formenden Säulenkörper einzubringen. Selbstverständlich ist es bei einem Ausführungsbeispiel der Säule auch möglich, den mindestens einen Anbindungsknoten mittels anderer Fügetechniken wie vorzugsweise Löten, Schweißen oder Kleben in die Kraftfahrzeug-Rohbaustruktur einzubinden.

Zur Herstellung einer Säule wird zumindest ein erster Bereich des Säulenkörpers aus einem ersten Werkstoff durch Schmieden hergestellt. Das Verfahren zeichnet sich dadurch aus, dass mindestens ein zweiter Bereich des Säulenkörpers aus einem zweiten Werkstoff hergestellt wird, der von dem ersten Werkstoff verschieden ist. Auf diese Weise wird eine Hybrid-Säule geschaffen, wodurch sich die Vorteile ergeben, die bereits in Zusammenhang mit der Säule erläutert wurden.

Es wird ein Verfahren bevorzugt, das sich dadurch auszeichnet, dass der erste Bereich und der zweite Bereich miteinander kraft- form- und/oder stoffschlüssig verbunden werden. Bevorzugt wird der zweite Bereich in den ersten Bereich eingeschmiedet. Alternativ oder zusätzlich wird der zweite Bereich an den ersten Bereich angeschmiedet. Alternativ oder zusätzlich wird der zweite Bereich mit dem ersten Bereich umschmiedet. Dabei spricht ein Einschmieden an, dass der zweite Bereich vollständig von dem Material des ersten Bereichs umgriffen wird. Ein Anschmieden spricht an, dass der zweite Bereich durch Schmieden an den ersten Bereich angefügt wird, wobei beispielsweise der zweite Bereich Bohrungen aufweisen kann, durch welche Material des ersten Bereichs von einer ersten Seite her gedrängt wird, wobei das Material den zweiten Bereich auf einer zweiten Seite hintergreift, sodass letztlich eine form- und kraftschlüssige Verbindung bewirkt wird. Ein Umschmieden spricht an, dass das Material des ersten Bereichs den zweiten Bereich durch das Schmieden bereichsweise umgreift. Besonders bevorzugt wird allerdings ein Verfahren, bei welchem der erste und der zweite Bereich gemeinsam in einem Hybridschmiedeverfahren hergestellt werden.

Es wird ein Verfahren bevorzugt, bei welchem zumindest der erste Bereich der Säule durch Warmschmieden hergestellt wird. Hierbei sind höhere Umformgrade erzielbar. Es wird auch eine Ausführungsform des Verfahrens bevorzugt, bei welchem zumindest der erste Bereich der Säule durch Halbwarmschmieden hergestellt wird. Hierbei sind geringere Umformgrade darstellbar als beim Warmschmieden. Schließlich wird auch ein Verfahren bevorzugt, bei welchem zumindest der erste Bereich des Säulenkörpers durch Kaltschmieden hergestellt wird. Die Wahl einer Umformtemperatur richtet sich bei der Hybrid-Säule, die mindestens zwei Werkstoffe umfasst, nach demjenigen Werkstoff, der die niedrigste Schmelztemperatur aufweist. Diese liegt bei einem Leichtmetall, insbesondere bei Aluminium oder Magnesium beziehungsweise Aluminium- oder Magnesiumlegierungen, ungefähr bei 650°C. Es zeigt sich, dass bei einer Temperatur dieser Größenordnung eine Verzunderungsneigung von Stahl sehr gering ausgeprägt ist.

Es wird auch ein Verfahren bevorzugt, das sich dadurch auszeichnet, dass die Säule während und/oder nach dem Schmieden einer Wärmebehandlung unterzogen wird. Besonders bevorzugt wird die Säule während und/oder nach einem Warmschmieden einer Wärmebehandlung unterzogen wird. Vorzugsweise wird die Säule einer lokalen Wärmebehandlung unterzogen. Mithilfe einer lokalen oder partiellen Wärmebehandlung ist es möglich, entsprechende lokale Eigenschaftsprofile in der Säule zu erzeugen, wobei bevorzugt einerseits duktile Bereiche und andererseits hochfeste Bereiche ausgebildet werden können.

Die Beschreibung der Säule einerseits und des Verfahrens andererseits sind komplementär zueinander zu verstehen. Insbesondere wird ein Verfahren bevorzugt, welches sich durch wenigstens einen Verfahrensschritt auszeichnet, der durch mindestens ein Merkmal, vorzugsweise Kombinationen hiervon, eines Ausführungsbeispiels der Säule bedingt ist. Umgekehrt wird ein Ausführungsbeispiel der Säule bevorzugt, welches durch mindestens ein Merkmal gekennzeichnet ist, welches durch wenigstens einen Verfahrensschritt, vorzugsweise Kombinationen hiervon, einer Ausführungsform des Verfahrens bedingt ist. Alle in Zusammenhang mit der Säule beschriebenen Verfahrensschritte sind vorzugsweise einzeln oder in Kombination miteinander Schritte einer bevorzugten Ausführungsform des Verfahrens. Alle in Zusammenhang mit dem Verfahren beschriebenen Merkmale sind vorzugsweise einzeln oder in Kombination miteinander Merkmale eines bevorzugten Ausführungsbeispiels der Säule.

Zur Lösung der Aufgabe wird schließlich auch eine Kraftfahrzeug-Rohbaustruktur mit den Merkmalen des Anspruchs 6 vorgeschlagen. Diese zeichnet sich aus durch eine Säule nach einem der zuvor beschriebenen Ausführungsbeispiele. Alternativ zeichnet sich die Kraftfahrzeug-Rohbaustruktur aus durch eine Säule, die mithilfe eines Verfahrens nach einer der zuvor beschriebenen Ausführungsformen hergestellt ist. Insoweit ergeben sich in Hinblick auf die Kraftfahrzeug-Rohbaustruktur die Vorteile, die bereits in Zusammenhang mit der Säule und dem Verfahren beschrieben wurden.

Die Erfindung wird im Folgenden anhand der Zeichnung näher erläutert. Dabei zeigen:
- Fig. 1: eine schematische Darstellung eines Ausführungsbeispiels einer als Langsäule ausgebildeten Säule, und
- Fig. 2: eine schematische Darstellung eines Ausführungsbeispiels einer als Kurzsäule ausgebildeten Säule.

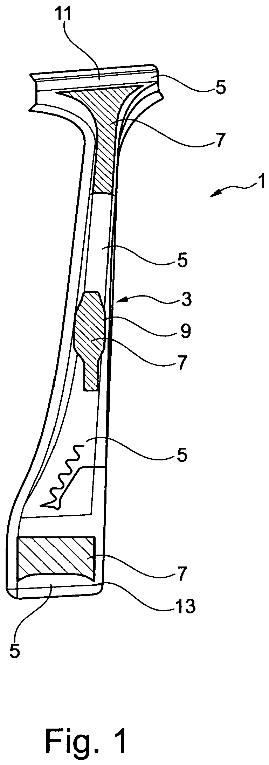

Figur 1 zeigt eine schematische Darstellung einer Säule 1, die als Langsäule ausgebildet ist. Diese weist einen Säulenkörper 3 auf, der in einem ersten Bereichen 5 einen ersten Werkstoff, beispielsweise ein Leichtmetall oder eine Leichtmetalllegierung umfasst, wobei der Säulenkörper 3 in dem ersten Bereichen 5 durch Schmieden hergestellt ist. Der Säulenkörper 1 umfasst hier drei zweite Bereiche 7, die einen zweiten Werkstoff umfassen, der von dem ersten Werkstoff verschieden ist. Die zweiten Bereiche 7 sind vorzugsweise als Versteifungseinlagen, beispielsweise aus höherfestem Stahl, oder einer höherfesten Leichtmetalllegierung, insbesondere einer höherfesten Aluminiumlegierung. Der in Figur 1 mittlere zweite Bereich 7 ist hier als Funktionsbereich 9 ausgebildet, wobei er insbesondere als Türscharnierbereich ausgebildet ist.

Das dargestellte Ausführungsbeispiel der Säule 1 ist als B-Säule ausgebildet. Es umfasst einen einstückig mit dem Säulenkörper 3 ausgebildeten, insbesondere an diesen beim Schmieden angeformten oder aus dem Material des ersten Bereichs 5 ausgeformten oberen Anbindungsknoten 11, der zur Anbindung der Säule 1 an einen Dachrahmen einer Kraftfahrzeug-Rohbaustruktur vorgesehen ist.

Die Säule 1 weist außerdem einen ebenfalls einstückig mit dem Säulenkörper 3 ausgebildeten, unteren Anbindungsknoten 13 zur Anbindung des Säulenkörpers 3 an einen Längsträger und/oder einen Querträger im Bodenbereich der Kraftfahrzeug-Rohbaustruktur auf. Auch der untere Anbindungsknoten 13 ist vorzugsweise beim Schmieden aus dem Material des ersten Bereichs 5 ausgeformt oder an dieses angeformt.

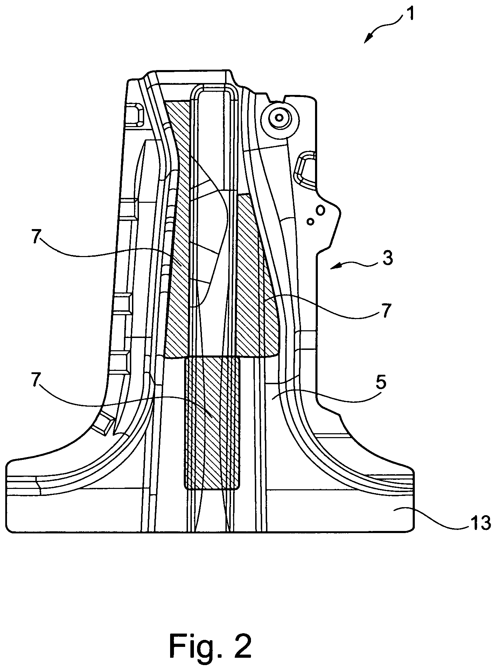

Figur 2 zeigt ein Ausführungsbeispiel der Säule 1, welches als Kurzsäule ausgebildet ist. Gleiche und funktionsgleiche Elemente sind mit gleichen Bezugszeichen versehen, sodass insofern auf die vorangegangene Beschreibung verwiesen wird. Auch dieses Ausführungsbeispiel der Säule 1 ist vorzugsweise als B-Säule ausgebildet. Es weist allerdings nur den unteren Anbindungsknoten 13 auf, weil keine Anbindung an einen Dachrahmen vorgesehen ist, den die Kraftfahrzeug-Rohbaustruktur bei dem Kraftfahrzeug, für welches das Ausführungsbeispiel der Säule 1 vorgesehen ist, nicht umfasst.

Die zweiten Bereiche 7 sind auch bei diesem Ausführungsbeispiel vorzugsweise als Verstärkungsbereiche und/oder Funktionsbereiche ausgebildet, wobei sie bevorzugt Stahl oder eine höherfeste Aluminiumlegierung als zweiten Werkstoff umfassen.

Insgesamt zeigt sich, dass die hier vorgeschlagene Säule beziehungsweise eine mithilfe des hier vorgeschlagenen Verfahrens hergestellte Säule besonders günstige, optimierte Bauteileigenschaften aufweist, wobei sie zugleich einfach und kostengünstig herstellbar sowie ebenfalls einfach und kostengünstig mit benachbarten Elementen einer Kraftfahrzeug-Rohbaustruktur verbindbar ist. Entsprechend ergeben sich auch für eine Kraftfahrzeug-Rohbaustruktur, die mindestens eine solche Säule aufweist, besonders günstige Eigenschaften.

## Patentansprüche

1. Säule (1) für eine Kraftfahrzeug-Rohbaustruktur, mit einem Säulenkörper (3), der zumindest in einem ersten Bereich (5) einen ersten Werkstoff und in einem zweiten, als Verstärkungsbereich ausgebildeter Bereich (7) einen von dem ersten Werkstoff verschiedenen Werkstoff umfasst, wobei der erste Bereich (5) durch Schmieden hergestellt ist, **dadurch gekennzeichnet, dass** der Verstärkungsbereich (7) durch eine Verstärkungseinlage, einen Verstärkungskern und/oder eine Verstärkungsseele aus einem Stahl, einem Leichtmetall oder einer Leichtmetalllegierung gebildet und in/an den ersten Bereich (5) eingeschmiedet, umschmiedet oder angeschmiedet ist.

2. Säule (1) nach Anspruch 1,
**dadurch gekennzeichnet, dass**
der erste Werkstoff ein Leichtmetall oder eine Leichtmetalllegierung umfasst.

3. Säule (1) nach einem der vorhergehenden Ansprüche,
**dadurch gekennzeichnet, dass**
der zweite Bereich (7) als Funktionsbereich (9) ausgebildet ist.

4. Säule (1) nach einem der vorhergehenden Ansprüche,
**dadurch gekennzeichnet, dass**
die Säule (1) als A-Säule, als B-Säule, oder als C-Säule ausgebildet ist.

5. Säule (1) nach einem der vorhergehenden Ansprüche,
**dadurch gekennzeichnet, dass**
mindestens ein Anbindungsknoten (11, 13) zur Anbindung des Säulenkörpers (3) an eine Kraftfahrzeug-Rohbaustruktur einstückig mit dem Säulenkörper (3) ausgebildet ist.

6. Kraftfahrzeug-Rohbaustruktur mit einer Säule (1) nach einem der Ansprüche 1 bis 5.

## Claims

1. Pillar (1) for a motor vehicle body shell structure, comprising a pillar body (3) containing at least in a first region (5) a first material and in a second region (7) designed as a reinforcement region a second material which is different from the first material, the first region (5) being produced by forging,
**characterised in that**
the reinforcement region (7) is formed by means of a reinforcement insert and/or a reinforcement core made of a steel, a light metal or a light metal alloy and forged into, around or onto the first region (5).

2. Pillar (1) according to claim 1,
**characterised in that**
the first material contains a light metal or a light metal alloy.

3. Pillar (1) according to any of the preceding claims,
**characterised in that**
the second region (7) is designed as a functional region.

4. Pillar (1) according to any of the preceding claims,
**characterised in that**
the pillar (1) is designed as an A-pillar, a B-pillar or a C-pillar.

5. Pillar (1) according to any of the preceding claims,
**characterised in that**
at least one connecting node (11, 13) for connecting the pillar body (3) to the motor vehicle body shell structure is formed integrally with the pillar body (3).

6. Motor vehicle body shell structure with a pillar (1) according to any of claims 1 to 5.

## Revendications

1. Montant (1) pour une structure de caisse nue de véhicule automobile, comprenant un corps (3) de montant, qui comprend au moins dans une première région (5) une première matière et dans une seconde région (7) conçue comme une zone de renfort, une matière différente de la première matière, la première région (5) étant forgée, **caractérisé en ce que** la zone de renfort (7) est formé par un insert de renfort, un noyau de renfort et/ou une âme de renfort en acier, un métal léger ou un alliage de métal léger et forgé dans/sur la première région (5) ou autour de celle-ci.

2. Montant (1) selon la revendication 1, **caractérisé en ce que** la première matière comprend un métal léger ou un alliage de métal léger.

3. Montant (1) selon l'une quelconque des revendications précédentes, **caractérisé en ce que** la seconde région (7) est conçue comme une région fonctionnelle (9).

4. Montant (1) selon l'une quelconque des revendications précédentes, **caractérisé en ce que** le montant est conçue comme un montant A, comme montant B ou comme montant C.

5. Montant (1) selon l'une quelconque des revendications précédentes, **caractérisé en ce qu'**au moins un noeud de liaison (11 ? 13) destiné à relier le corps (3) de montant à la structure de caisse nue de véhicule automobile est conçue d'un seul tenant avec le corps (3) de montant.

6. Structure de caisse nue de véhicule automobile comprenant un montant (1) selon l'une des revendications 1 à 5.
